# EUROPÄISCHE PATENTSCHRIFT

(11) **EP 0 421 246 B1**
(45) Veröffentlichungstag und Bekanntmachung des Hinweises auf die Patenterteilung: **23.03.1994**
(21) Anmeldenummer: 90118424.2
(22) Anmeldetag: 26.09.1990
(51) Int. Cl.: H02G 15/013, H02G 15/192, H02G 15/117

(54) **Kabelmuffe zum Verbinden und Abzweigen von Kabeln, insbesondere Fernmeldekabeln**
Cable sleeve for connecting and tapping cables, particularly telecommunications cables
Manchon de câbles pour connexion et dérivation de câbles, en particulier de câbles télécommunications

(30) Priorität: 14.12.1989 DE 3941269; 30.09.1989 DE 3932734
(43) Veröffentlichungstag der Anmeldung: 10.04.1991
(73) Patentinhaber: Stewing Kunststoffbetrieb GmbH Dorsten, 46282 Dorsten (DE)
(72) Erfinder: Dehling, Helmut, Dipl.-Ing., D-4270 Dorsten 11 (DE)
(74) Vertreter: Andrejewski, Walter

(56) Entgegenhaltungen:
- EP-A- 0 316 911
- FR-A- 2 332 637
- FR-A- 2 596 215
- US-A- 3 935 373

## Beschreibung

Die Erfindung betrifft eine Kabelmuffe zum Verbinden und Abzweigen von Kabeln, insbesondere Fernmeldekabeln, mit einem Muffenrohr und mit in die Stirnseiten des Muffenrohres einzusetzenden Dichtkörpern mit Kabeldurchführungsausnehmungen, wobei die quergeteilten Dichtkörper als gegeneinander verspannbare Dichtkörperhälften mit die Kabeldurchführungsausnehmungen auskleidenden halbkreisförmigen Dichtelementen zur Anpassung an unterschiedliche Kabeldurchmesser ausgebildet sind, die Dichtkörper in Kabellängsrichtung jeweils zwei mit vorgegebenem Abstand voneinander distanzierte Kabeldurchführungsausnehmungen aufweisen, und zwischen den vorderen und hinteren Kabeldurchführungsausnehmungen für die Kabel eine Injektionskammer mit einer Injektionsöffnung und einer Entlüftungsöffnung vorgesehen ist.

Es ist eine derartige Kabelmuffe bekannt, bei welcher die den jeweiligen Dichtkörper bildenden Dichtkörperhälften lediglich unter Zwischenschaltung von Dichtungsmaterial gegeneinander abgedichtet sind, so daß eine formschlüssige Verbindung fehlt. Darüber hinaus ist für jedes Kabel eine eigene Injektionskammer vorgesehen. Zur Anpassung an unterschiedliche Kabeldurchmesser finden komprimierbare Kunststoffeinsätze Verwendung. Derartige Kunststoffeinsätze sind deshalb problematisch, weil die Kabel nicht hinreichend abgestützt werden, sondern auftretende Relativbewegungen Einfluß auf die Dichtigkeit nehmen können. Offenbar aus diesem Grunde hat man biegesteife Kabeldurchführungen in lamellenartiger Aurführungsform versucht. Bei dieser lamellenartigen Bauweise bzw. Unterteilung der Injektionskammer ist jedoch eine Anpassung an unterschiedliche Kabeldurchmesser ausgeschlossen (vgl. FR-A-2 596 215).

Letzteres gilt auch für die in US-A-3 935 373 beschriebene Kabeldurchführung. In diesem Fall ist zwar für mehrere Kabel eine gemeinsame Injektionskammer vorgesehen, jedoch verlangt jedes Kabel eine eigene angepaßte Dichtkörperausbildung. Die Dichtkörper bestehen nicht aus gegeneinander verspannbaren Dichtkörperhälften, sondern aus Rohrabschnitten. Bei dem außenliegenden Rohrabschnitt handelt es sich um ein biegesteifes Mantelrohr, bei dem innenliegenden Rohrabschnitt um eine flexible und folglich an das jeweilige Kabel anpassungsfähige Auskleidung.

Außerdem kennt man Kabelmuffen für druckluftüberwachte Kabelanlagen, die im wesentlichen aus einem längsgeteilten, durch Klemmleisten zusammengehaltenen Muffenrohr und aus in den Stirnseiten des Muffenrohres angeordneten Dichtkörpern bestehen, wobei die Dichtkörper einen scheibenförmigen, vom Muffenmantel konzentrisch umgebenen Endflansch, einen daran angeformten, ins Muffeninnere gerichteten, gegenüber dem Endflansch verjüngten Ansatz und eine senkrecht zur Scheibenebene zwei- oder dreigeteilte Ausbildung aufweisen. Ferner sind die Dichtkörper durch diametral einander gegenüberliegende, in bezug auf die Trennebenen versetzt an den Ansätzen befestigte Schienen miteinander verbunden. Außerdem sind an den Ansätzen der Dichtkörperteile bzw. jeweils deren Trennebenen überbrückende starre Halteglieder angeordnet. Derartige Kabelmuffen sind in fertigungstechnischer und montagetechnischer Hinsicht verhältnismäßig kompliziert und hinsichtlich verschiedener Kabeldurchmesser nicht hinreichend flexibel. Insbesondere die Kabelabdichtung ist unbefriedigend. - Im übrigen kennt man eine Kabelgarnitur, bei der zur Abdichtung der Kabeldurchführungen Dichtungskammern vorgesehen sind, die mit einer zähflüssigen oder zähplastischen Dichtungsmasse ausgefüllt sind. Die Dichtungsmasse besteht in diesem Fall aus mehreren konzentrisch angeordneten halbringförmigen Dichtungsstücken.

Der Erfindung liegt die Aufgabe zugrunde, eine Kabelmuffe zum Verbinden und Abzweigen von Kabeln, insbesondere Fernmeldekabeln, der eingangs beschriebenen Art zu schaffen, die sich durch eine in fertigungstechnischer und montagetechnischer Hinsicht einfache sowie sichere Bauweise auszeichnet, ferner eine einwandfreie Abdichtung von Kabeln unterschiedlicher Durchmesser gewährleistet.

Diese Aufgabe löst die Erfindung dadurch, daß die den jeweiligen Dichtkörper bildenden Dichtkörperhälften stoßflächeneseitig in den Randbereichen ihrer Stoßflächen und zwischen den Kabeldurchführungsausnehmungen Nut/Federverbindungen aufweisen, daß eine für sämtliche Kabel gemeinsame Injektionskammer vorgesehen ist, und daß in die Kabeldurchführungsausnehmungen als Dichtelemente einzeln entfernbare Lagerschalen zur Anpassung an unterschiedliche Kabeldurchmesser eingesetzt sind. - Nach Lehre der Erfindung wird für die durch die erfindungsgemäße Kabelmuffe hindurchgeführten Kabel im Bereich jedes Dichtkörpers eine doppelflächige Kabellagerung erzielt. Darüber hinaus sorgt die Injektionskammer zwischen den beiden Kabellagern für eine einwandfreie Abdichtung der betreffenden Kabel. Denn dazu wird in die Injektionskammer Dichtmasse injiziert, so daß die Kabel im Dichtkörper allseitig und druckdicht abgedichtet sind. Die Kabeldurchführungsausnehmungen, welche die doppelflächigen Kabellager definieren, sind für maximale Kabeldurchmesser ausgelegt. Eine Anpassung an den jeweiligen Kabeldurchmesser erfolgt durch das Entfernen der aus einem Elastomer bestehenden Lagerschalen. Diese Lagerschalen haben darüber hinaus die Aufgabe, die Kabel so zu stützen bzw. zu halten, daß auftretende Relativbewegungen keinen Einfluß auf die Dichtigkeit haben. Dazu können die Kabeldurchführungsausnehmungen und die Lagerschalen eine ineinandergreifende Verzahnung, z. B. Kegelrillen, als Axialsicherung aufweisen. Ferner werden die Kabel mittels umwickelter Dichtbänder in die dem jeweiligen Kabeldurchmesser entsprechende Lagerschale eingesetzt. Auf diese Weise wird also ein eventueller Luftspalt zwischen dem betreffenden Kabel und der umgebenden Lagerschale ausgeglichen bzw. eliminiert, wobei die Dichtbänder ebenfalls aus Elastomer bestehen.

Weitere erfindungswesentliche Merkmale sind im folgenden aufgeführt. So können in die Kabeldurchführungsausnehmungen auch biegeelastische Adapterstopfen mit einer oder mehreren Bohrungen zum Hindurchführen von einem oder mehreren Kabeln unterschiedlicher Durchmesser einsetzbar sein. Derartige regelmäßig aus Gummi bestehende Adapterstopfen finden bevorzugt beim Abzweigen von Kabeln Verwendung. Zweckmäßigerweise sind in unbelegte Kabeldurchführungsöffnungen Füllstäbe mit gegen die Lagerschalen anliegenden Umfangsdichtungen, z. B. Ringdichtungen, eingesetzt. Auch insoweit wird eine einwandfreie Abdichtung erzielt.

Dazu lehrt die Erfindung in bezug auf die Injektionskammer, daß die Dichtkörperhälften eines jeden Dichtkörpers in ihren beiden randseitigen Stoßbereichen Dichtkammern zum Abdichten der Injektionskammer aufweisen und in die Dichtkammern verpreßbare Dichtprofile bzw. -blöcke einsetzbar sind. nach einem Vorschlag der Erfindung, dem selbständige Bedeutung zukommt, ist vorgesehen, daß lediglich die untere Dichtkörperhälfte eines jeden Dichtkörpers im Bereich ihrer randseitigen Stoßflächen die Dichtkammern mit jeweils einer Fixierungsnase zum Eingreifen in eine Fixierungsausnehmung der eingesetzten Dichtprofile aufweist, welche asl Dichtansätze einer den Dichtkörper in einer Fixierungsnut umlaufenden Umfangsdichtung, z. B. Rundschnurdichtung, ausgebildet sind. Auf diese Weise wird für die umlaufende Rundschnurdichtung, die zur Abdichtung des betreffenden Dichtkörpers gegen das Muffenrohr dient, zugleich eine Montagehilfe verwirklicht. Denn die in die Dichtkammern eingesetzten Dichtansätze der Rundschnurdichtung werden von den Fixierungsnasen verschiebesicher in der umlaufenden Fixierungsnut gehalten, so daß eine einwandfreie Montage der Umfangsdichtung und des Muffenrohres möglich ist. - Die Injektionsöffnung und Entlüftungsöffnung können als Bohrungen mit einem Schraubstopfen ausgebildet sein. Im Zuge des Injizierens von Dichtmasse in die Injektionskammer dient die Entlüftungsöffnung zugleich als Kontrollöffnung. Denn aus der Entlüftungsöffnung austretende Dichtmasse macht deutlich, daß die Injektionskammer gefüllt ist. In die obere und/oder untere Dichtkörperhälfte ist zweckmäßigerweise ein Luftventil eingesetzt, um die Druckdichtigkeit der fertig montierten Kabelmuffe überprüfen zu können. - Ferner empfiehlt die Erfindung, daß die Dichtkörperhälften paarweise mittels Schraubenbolzen gegeneinander verspannbar sind und die Schraubenbolzen in zwischen den vorderen und hinteren Kabeldurchführungsausnehmungen eingebrachten Bohrungen mit Gewindeeinsätzen einschraubbar sind. Durch das Verspannen der Dichtkörperhälften gegeneinander wird eine einwandfreie Abdichtung der Stoßflächen und insbesondere der Nut/Federverbindungen ebenso erreicht wie eine Zugentlastung der Kabel in den Lagerschalen. Die beiden in das Muffenrohr einzusetzenden Dichtkörper sind vorzugsweise mittels einer oberen und unteren Zugentlastungsschiene distanziert. Dazu weisen die Zugentlastungsschienen in vorgegebenem Abstand Zentrierbohrungen auf, in welche Zentriernocken auf der Rückseite bzw. den einander zugewandten Seiten der Dichtkörper eingreifen. Darüber hinaus ist eine zusätzliche Verschraubung der Zugentlastungsschienen vorgesehen. Ferner können die Dichtkörper beidseitig, d. h. auf ihrer Front- und Rückseite Zentrieranformungen für Zentriernasen an dem Muffenrohr aufweisen. Diese Zentrieranformungen dienen als Anschläge für die Zentriernasen und folglich als Drehsicherung für das Muffenrohr. Zweckmäßigerweise weisen die Dichtkörper einen elliptischen Umfang auf und bestehen aus thermoplastischem Kunststoff. Dadurch wird eine flache und dennoch volumengroße Bauweise für die erfindungsgemäße Kabelmuffe erreicht, so daß die erfindungsgemäße Kabelmuffe auch für das Verbinden und Abzweigen von Glasfaserkabeln eingesetzt werden kann, zumal sie zur Aufnahme der hinreichenden Anzahl von Spleißkassetten geeignet ist.

Die durch die Erfindung erreichten Vorteile sind im wesentlichen darin zu sehen, daß eine Kabelmuffe zum Verbinden und Abzweigen von Kabeln, insbesondere von herkömmlichen Fernmeldekabeln und Glasfaserkabeln verwirklicht wird, die sich aufgrund der erfindungsgemäßen Ausbildung der stirnseitigen Dichtkörper durch eine in fertigungstechnischer und montagetechnischer Hinsicht einfache sowie funktionssichere Bauweise auszeichnet, ferner unschwer druckluftdicht und wasserdicht verschlossen werden kann und dennoch eine einwandfreie Abdichtung von Kabeln mit unterschiedlichen Durchmessern gewährleistet. Darüber hinaus ist auch eine einwandfreie Abdichtung zwischen dem Muffenrohr und den Dichtkörpern gegeben.

Im folgenden wird die Erfindung anhand einer lediglich ein Ausführungsbeispiel darstellenden Zeichnung näher erläutert; es zeigen
- Fig. 1: eine erfindungsgemäße Kabelmuffe im Vertikalschnitt,
- Fig. 2: einen Schnitt A-B durch den Gegenstand nach Fig. 1,
- Fig. 3: eine Frontansicht auf den Gegenstand nach Fig. 1 in Pfeilrichtung,
- Fig. 4: die obere Dichtkörperhälfte eines Dichtkörpers für den Gegenstand nach Fig. 1,
- Fig. 5: den Gegenstand nach Fig. 4 in Ansicht X,
- Fig. 6: einen Schnitt C-D durch den Gegenstand nach Fig. 4,
- Fig. 7: einen Schnitt E-F durch den Gegenstand nach Fig. 4,
- Fig. 8: eine Ansicht Z auf den Gegenstand nach Fig. 4,
- Fig. 9: eine Ansicht Y auf den Gegenstand nach Fig. 6,
- Fig. 10: die untere Dichtkörperhälfte eines Dichtkörpers für den Gegenstand nach Fig. 1,
- Fig. 11: eine Ansicht X auf den Gegenstand nach Fig. 10,
- Fig. 12: einen Vertikalschnitt C-D durch den Gegenstand nach Fig. 10,
- Fig. 13: einen Vertikalschnitt E-F durch den Gegenstand nach Fig. 10,
- Fig. 14: eine Ansicht Z auf den Gegenstand nach Fig. 10 und
- Fig. 15: eine Ansicht Y auf den Gegenstand nach Fig. 12.

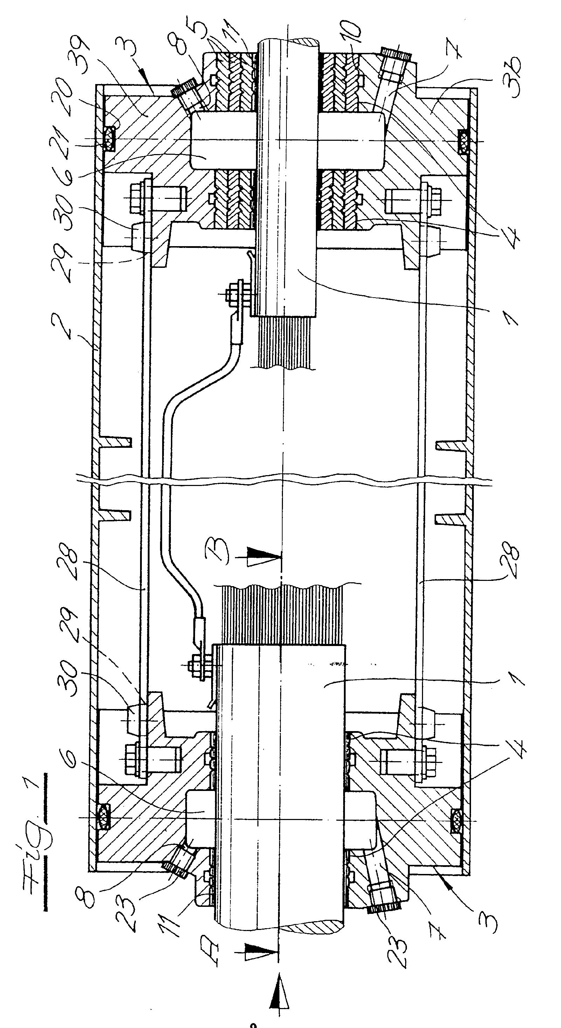

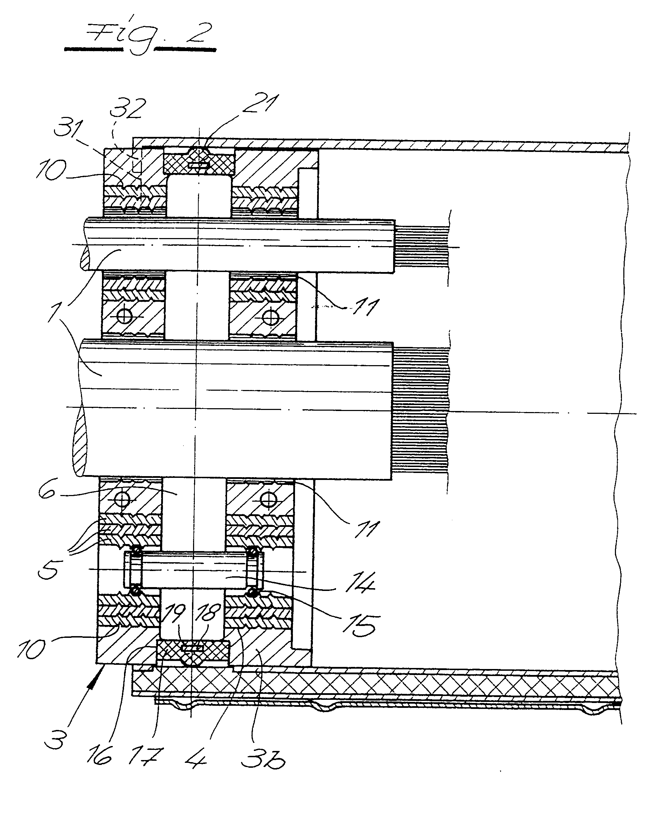

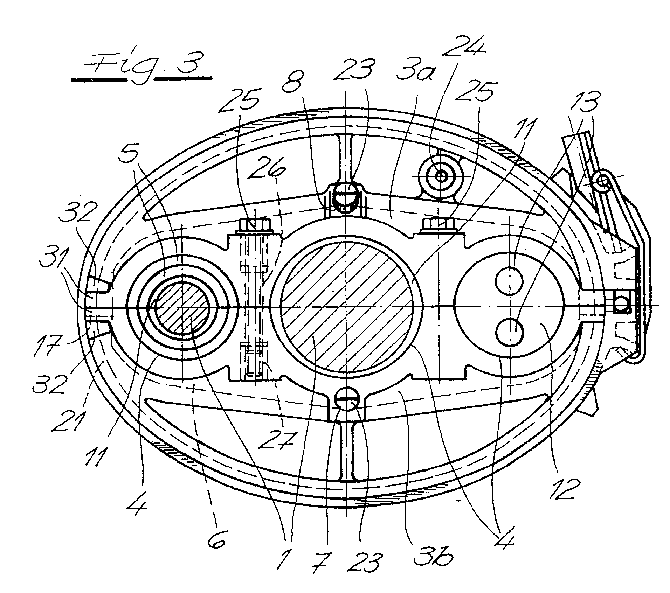

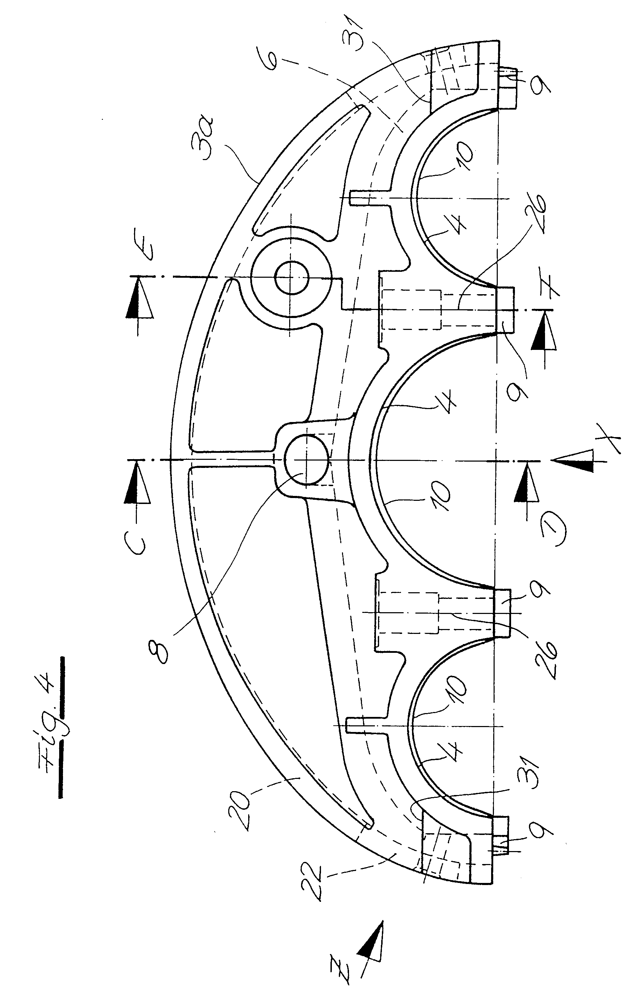

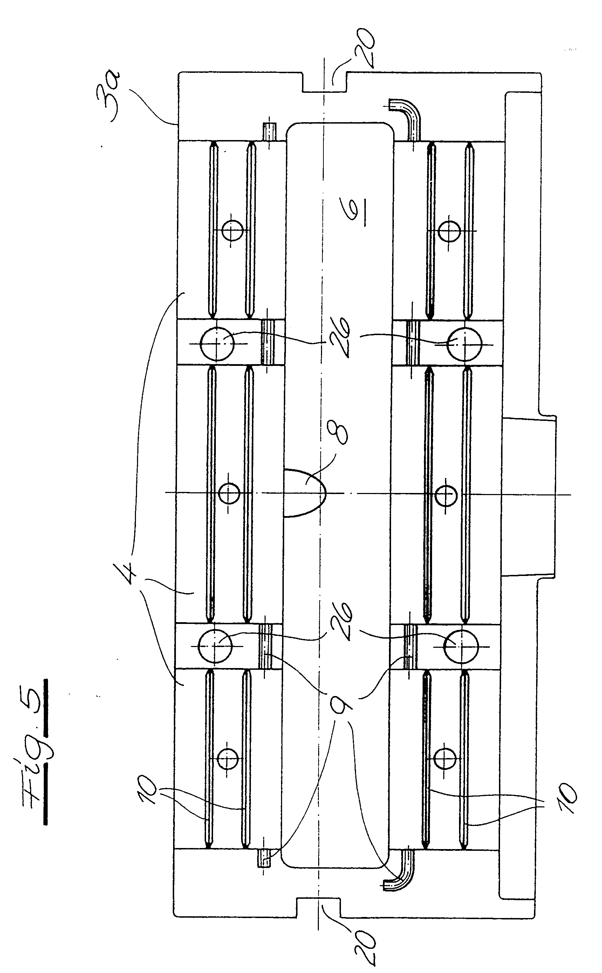

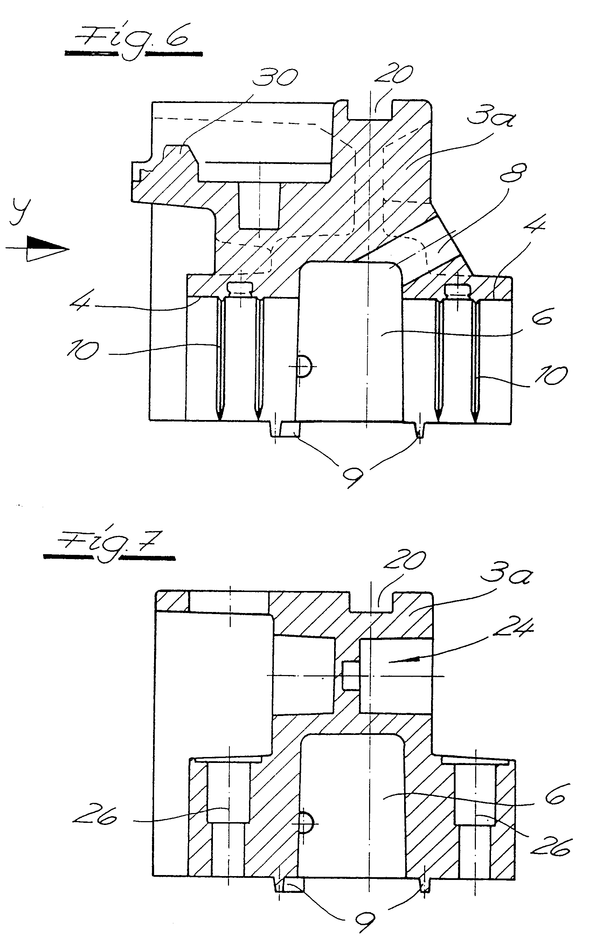

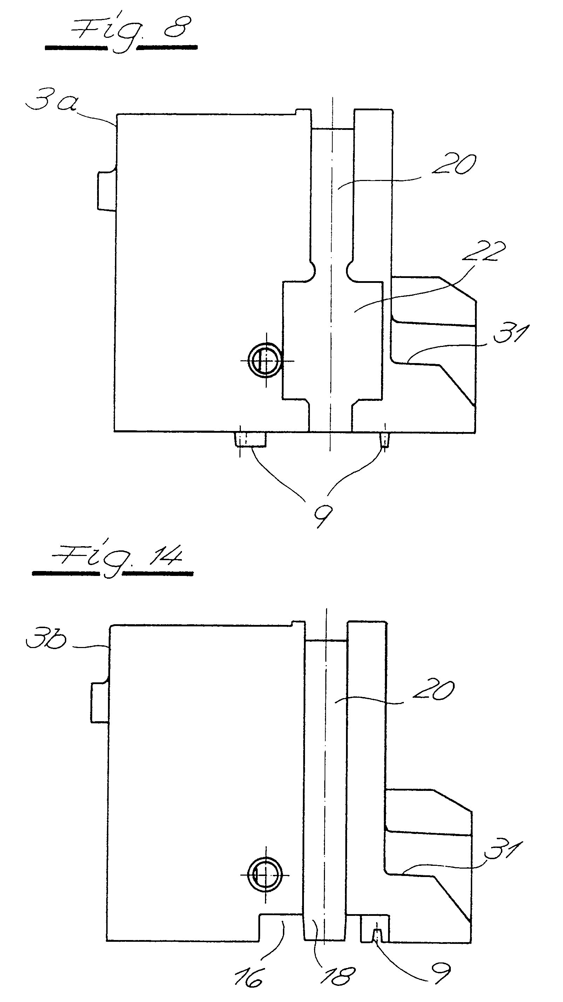

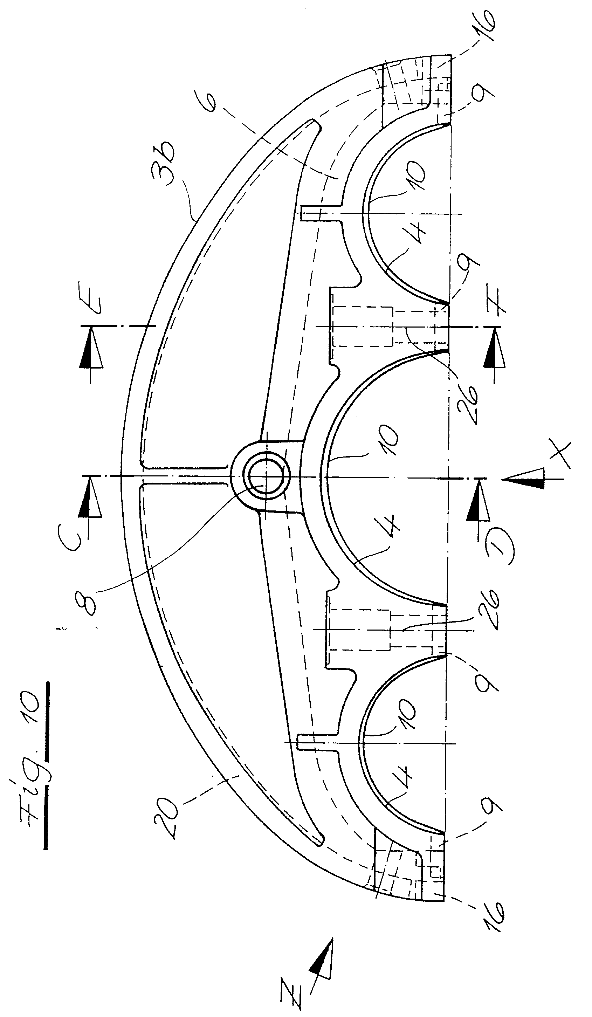

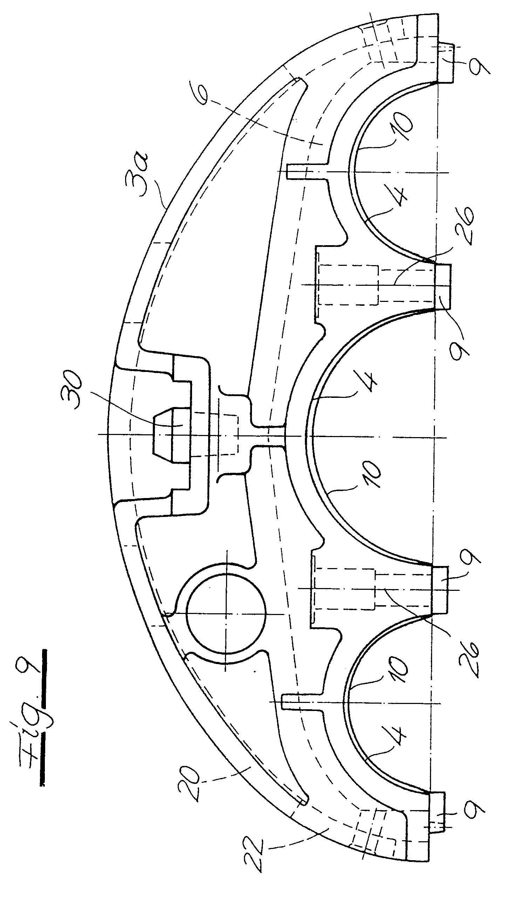

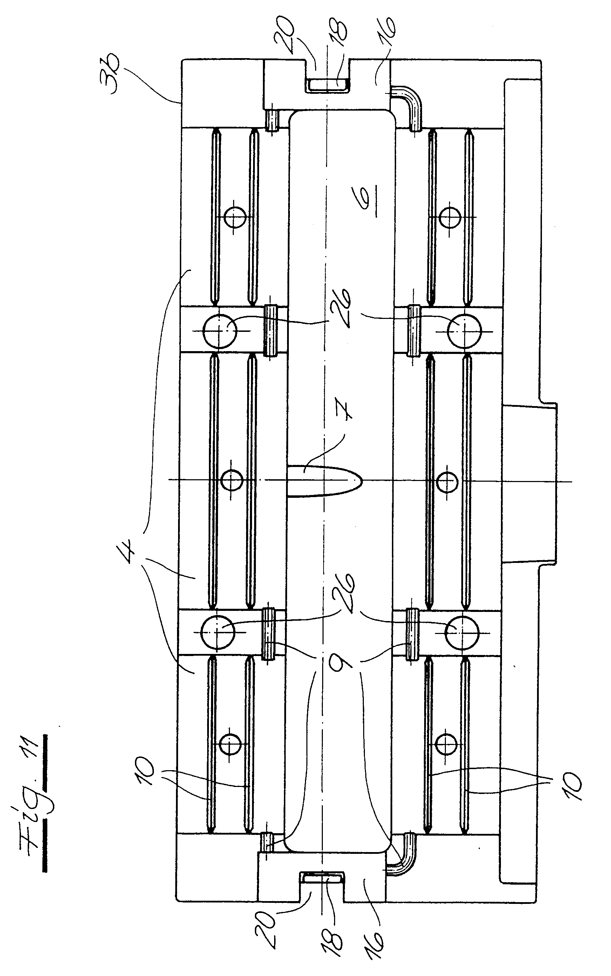

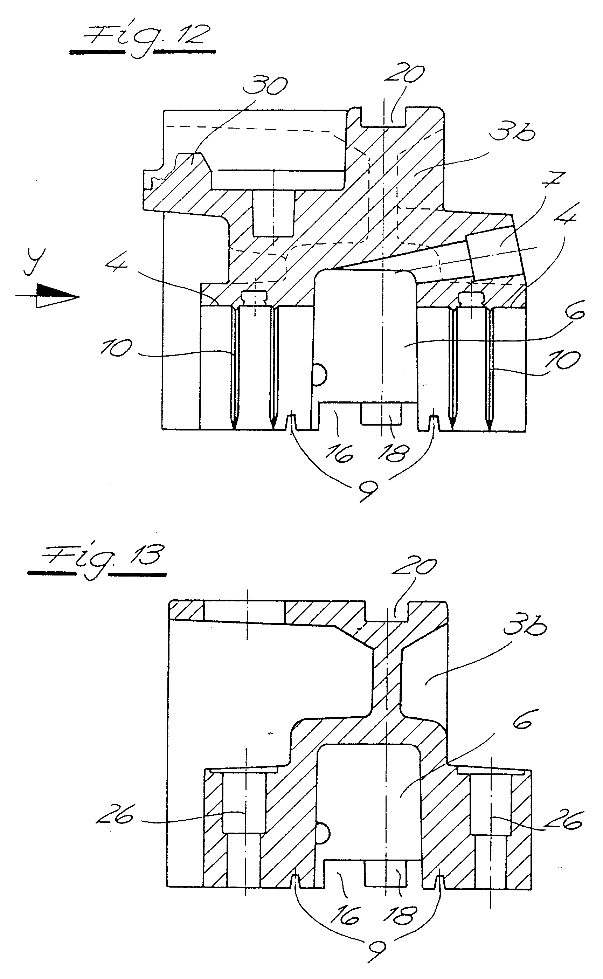

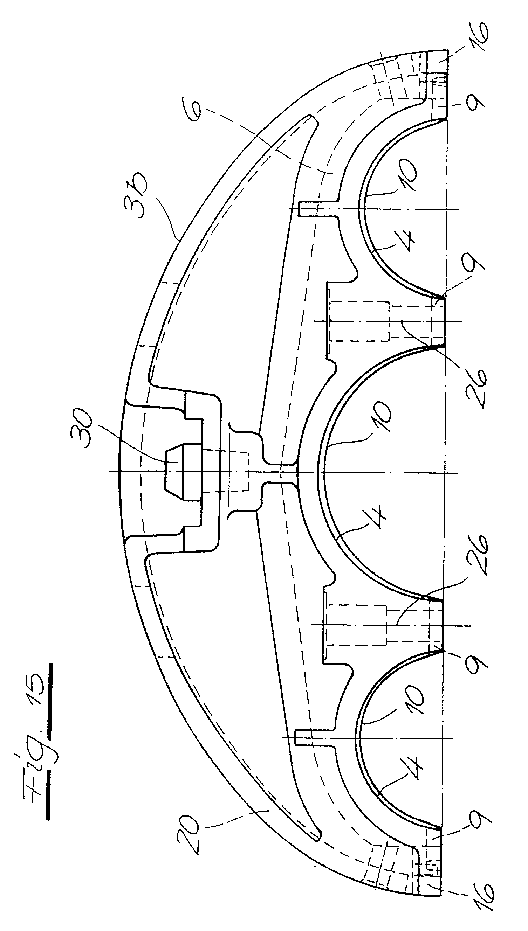

In den Figuren ist eine Kabelmuffe zum Verbinden und Abzweigen von Kabeln 1, insbesondere Fernmeldekabeln, dargestellt. Diese Kabelmuffe besitzt in ihrem grundsätzlichen Aufbau ein längsgeteiltes verschließbares Muffenrohr 2 mit in die Stirnseiten des Muffenrohres 2 eingesetzten Dichtkörpern 3. Diese Dichtkörper 3 weisen Kabeldurchführungsausnehmungen 4 auf und sind unter Bildung von Dichtkörperhälften 3a, 3b quergeteilt. Die Kabeldurchführungsausnehmungen 4 sind mit halbkreisförmigen Dichtelementen 5 zur Anpassung an unterschiedliche Kabeldurchmesser ausgekleidet.

Die Dichtkörper 3 weisen in Kabellängsrichtung jeweils zwei mit vorgegebenem Abstand voneinander distanzierte Kabeldurchführungsausnehmungen 4 auf. Zwischen den vorderen und hinteren Kabeldurchführungsausnehmungen 4 ist eine für sämtliche hindurchgeführte Kabel 1 gemeinsame Injektionskammer 6 mit einer Injektionsöffnung 7 und einer Entlüftungsöffnung 8 vorgesehen. Die den jeweiligen Dichtkörper 3 bildenden Dichtkörperhälften 3a, 3b weisen stoßflächenseitig in den Randbereichen ihrer Stoßflächen und zwischen den Kabeldurchführungsausnehmungen 4 Nut/Federverbindungen 9 auf und sind gegeneinander verspannbar. In die Kabeldurchführungsausnehmungen 4 sind als halbkreisförmige Dichtelemente einzeln entfernbare Lagerschalen 5 zur Anpassung an unterschiedliche Kabeldurchmesser eingesetzt. Die Kabeldurchführungsausnehmungen 4 und die Lagerschalen 5 weisen eine ineinandergreifende Verzahnung 10, z. B. Kegelrillen, als Axialsicherung auf. Die Kabel 1 sind mittels umwickelter Dichtbänder 11 in die dem jeweiligen Kabeldurchmesser entsprechende Lagerschale 5 eingesetzt. Außerdem können in die Kabeldurchführungsausnehmungen 4 biegeelastische Adapterstopfen 12 mit einer oder mehreren Bohrungen 13 zum Hindurchführen von einem oder mehreren Kabeln 1 unterschiedlicher Durchmesser einsetzbar sein, was lediglich angedeutet ist. - In unbelegte Kabeldurchführungsöffnungen sind Füllstäbe 14 mit gegen die betreffende Lagerschale 5 anliegenden Ringdichtungen 15 einsetzbar. Die Dichtkörperhälften 3a, 3b weisen in ihren beiden randseitigen Stoßbereichen Dichtkammern 16 zum Abdichten der Injektionskammer 6 auf. In die Dichtkammern 16 sind verpreßbare Dichtprofile 17 einsetzbar. Bei dem Ausführungsbeispiel weist lediglich die untere Dichtkörperhälfte 3b im Bereich ihrer randseitigen Stoßflächen die Dichtkammern 16 mit jeweils einer Fixierungsnase 18 zum Eingreifen in eine Fixierungsausnehmung 19 der eingesetzten Dichtprofile 17 auf, welche als Dichtansätze eine den jeweiligen Dichtkörper 3 in einer Fixierungsnut 20 umlaufenden Umfangsdichtung 21, z. B. Rundschnurdichtung, ausgebildet sind. Die Fixierungsnut 20 weist ein Lagerbett 22 für sich überlappende Dichtzungen an den Enden der Rundschnurdichtung auf. Diese überlappenden Dichtzungen sind nicht dargestellt.

Die Injektionsöffnung 7 und Entlüftungsöffnung 8 sind als Bohrungen mit einem Schraubstopfen 23 ausgebildet. In die obere Dichtkörperhälfte 3a ist ein Luftventil 24 eingesetzt. Die Dichtkörperhälften 3a, 3b sind paarweise mittels Schraubenbolzen 25 gegeneinander verspannbar. Die Schraubenbolzen 25 sind in zwischen den vorderen und hinteren Kabeldurchführungsausnehmungen 4 eingebrachten Bohrungen 26 mit Gewindeeinsätzen 27 einschraubbar. - Die beiden in das Muffenrohr 2 enzusetzenden Dichtkörper 3 sind mittels einer oberen und unteren Zugentlastungsschiene 28 distanzierbar. Dazu weisen die mit den Dichtkörpern 3 zu verschraubenden Zugentlastungsschienen 28 in vorgegebenem Abstand Zentrierbohrungen 29 auf, in welche Zentriernocken 30 auf der Rückseite der Dichtkörper 3 eingreifen. Die Dichtkörper 3 weisen ferner beidseitig Zentrieranformungen 31 als Anschläge für Zentriernasen 32 an dem Muffenrohr 2 auf, so daß für das Muffenrohr 2 eine Drehsicherung verwirklicht wird. Im übrigen bestehen die Dichtkörper 3 aus thermoplastischem Kunststoff und weisen einen elliptischen Umfang auf.

## Patentansprüche

1. Kabelmuffe zum Verbinden und Abzweigen von Kabeln (1), insbesondere Fernmeldekabeln, mit einem Muffenrohr (2) und mit in die Stirnseiten des Muffenrohres (2) einzusetzenden Dichtkörpern (3) mit Kabeldurchführungsausnehmungen (4), wobei die quergeteilten Dichtkörper (3) als gegeneinander verspannbare Dichtkörperhälften (3a, 3b) mit die Kabeldurchführungsausnehmungen (4) auskleidenden halbkreisförmigen Dichtelementen (5) zur Anpassung an unterschiedliche Kabeldurchmesser ausgebildet sind, die Dichtkörper (3) in Kabellängsrichtung jeweils zwei mit vorgegebenem Abstand voneinander distanzierte Kabeldurchführungsausnehmungen (4) aufweisen, und zwischen den vorderen und hinteren Kabeldurchführungsausnehmungen (4) für die Kabel (1) eine Injektionskammer (6) mit einer Injektionsöffnung (7) und einer Entlüftungsöffnung (8) vorgesehen ist, **dadurch gekennzeichnet,** daß die den jeweiligen Dichtkörper (3) bildenden Dichtkörperhälften (3a, 3b) stoßflächenseitig in den Bandbereichen ihrer Stoßflächen und zwischen den Kabeldurchführungsausnehmungen (4) Nut/Federverbindungen (9) aufweisen, daß eine für sämtliche Kabel (1) gemeinsame Injektionskammer (7) vorgesehen ist, und daß in die Kabeldurchführungsausnehmungen (4) als Dichtelemente einzeln entfernbare Lagerschalen (5) zur Anpassung an unterschiedliche Kabeldurchmesser eingesetzt sind.

2. Kabelmuffe nach Anspruch 1, dadurch gekennzeichnet, daß die Kabeldurchführungsausnehmungen (4) und die Lagerschalen (5) eine ineinandergreifende Verzahnung (10), z. B. Kegelrillen, als Axialsicherung aufweisen.

3. Kabelmuffe nach Anspruch 1 oder 2, dadurch gekennzeichnet, daß die Kabel (1) mittels umwickelter Dichtbänder (11) in die dem jeweiligen Kabeldurchmesser entsprechende Lagerschale (5) eingesetzt sind.

4. Kabelmuffe nach einem der Ansprüche 1 bis 3, dadurch gekennzeichnet, daß in die Kabeldurchführungsausnehmungen (4) biegeelastische Adapterstopfen (12) mit einer oder mehreren Bohrungen (13) zum Hindurchführen von einem oder mehreren Kabeln (1) unterschiedlicher Durchmesser einsetzbar sind.

5. Kabelmuffe nach einem der Ansprüche 1 bis 4, dadurch gekennzeichnet, daß in unbelegte Kabeldurchführungsöffnungen Füllstäbe (14) mit gegen die betreffende Lagerschale (5) anliegenden Ringdichtungen (15) eingesetzt sind.

6. Kabelmuffe nach einem der Ansprüche 1 bis 5, dadurch gekennzeichnet, daß die Dichtkörperhälften (3a, 3b) in ihren beiden randseitigen Stoßbereichen Dichtkammern (16) zum Abdichten der Injektionskammer (6) aufweisen und in die Dichtkammern (16) verpreßbare Dichtprofile (17) einsetzbar sind.

7. Kabelmuffe nach einem der Ansprüche 1 bis 6, dadurch gekennzeichnet, daß lediglich die untere Dichtkörperhälfte (3b) im Bereich ihrer randseitigen Stoßflächen die Dichtkammern (16) mit jeweils einer Fixierungsnase (18) zum Eingreifen in eine Fixierungsausnehmung (19) der eingesetzten Dichtprofile (17) aufweist, welche als Dichtansätze eine den jeweiligen Dichtkörper (3) in einer Fixierungsnut (20) umlaufenden Umfangsdichtung (21), z. B. Rundschnurdichtung, ausgebildet sind.

8. Kabelmuffe nach einem der Ansprüche 1 bis 7, dadurch gekennzeichnet, daß die Injektionsöffnung (7) und die Entlüftungsöffnung (8) als Bohrungen mit einem Schraubstopfen (23) ausgebildet sind.

9. Kabelmuffe nach einem der Ansprüche 1 bis 8, dadurch gekennzeichnet, daß in die obere und/oder untere Dichtkörperhälfte (3a bzw. 3b) ein Luftventil (24) eingesetzt ist.

10. Kabelmuffe nach einem der Ansprüche 1 bis 9, dadurch gekennzeichnet, daß die Dichtkörperhälften (3a, 3b) paarweise mittels Schraubenbolzen (25) gegeneinander verspannbar sind und die Schraubenbolzen (25) in zwischen den vorderen und hinteren Kabeldurchführungsausnehmungen (4) eingebrachten Bohrungen (26) mit Gewindeeinsätzen (27) einschraubbar sind.

11. Kabelmuffe nach einem der Ansprüche 1 bis 10, dadurch gekennzeichnet, daß die beiden in das Muffenrohr (2) einzusetzenden Dichtkörper (3) mittels einer oberen und unteren Zugentlastungsschiene (28) distanziert sind und dazu die mit den Dichtkörpern (3) verschraubbaren Zugentlastungsschienen (28) in vorgegebenem Abstand Zentrierbohrungen (29) aufweisen, in welche Zentriernocken (30) auf den einander zugewandten Seiten der Dichtkörper (3) eingreifen.

12. Kabelmuffe nach einem der Ansprüche 1 bis 11, dadurch gekennzeichnet, daß die Dichtkörper (3) beidseitig Zentrieranformungen (31) als Anschläge für Zentriernasen (32) an dem Muffenrohr (2) aufweisen.

13. Kabelmuffe nach einem der Ansprüche 1 bis 12, dadurch gekennzeichnet, daß die Dichtkörper (3) einen elliptischen Umfang aufweisen und aus thermoplastischem Kunststoff bestehen.

## Claims

1. A cable sleeve for the connection and branching of cables (1), particularly communications cables, with a sleeve tube (2), and with sealing bodies (3) with cable lead-through apertures (4) for insertion in the ends of the sleeve tube (2), wherein the transversely divided sealing bodies (3) are constructed as sealing body halves (3a, 3b) which can be braced against each other with semicircular sealing elements (5) lining the cable lead-through apertures (4) for adaptation to different cable diameters, the sealing bodies (3) each have two cable lead-through apertures (4) spaced apart from each other at a predetermined distance in the longitudinal direction of the cable, and an injection chamber (6), with an injection opening (7) and a deaeration opening (8), is provided between the front and rear cable lead-through apertures (4) for the cables (1), characterised in that the sealing body halves (3a, 3b) forming the respective sealing body (3) have tongue-and-groove joints (9) on the side of their abutting faces in the edge regions of their abutting faces and between the cable lead-through apertures (4), that a common injection chamber (7) is provided for all cables (1), and that individually removable supporting shells (5) are inserted as sealing elements in the cable lead-through apertures (4) for adaptation to different cable diameters.

2. A cable sleeve according to claim 1, characterised in that the cable lead-through apertures (4) and the supporting shells (5) have mutually engaging toothed portions (10), e.g. tapered channels, as an axial securement.

3. A cable sleeve according to claim 1 or 2, characterised in that the cables (1) are inserted in the supporting shell (5) corresponding to the respective cable diameter by means of wound sealing strips (11).

4. A cable sleeve according to any one of claims 1 to 3, characterised in that resiliently flexible adapter plugs (12) with one or more holes (13) can be inserted in the cable lead-through apertures (4) for leading through one or more cables (1) of different diameters.

5. A cable sleeve according to any one of claims 1 to 4, characterised in that filler rods (14) with ring seals (15) seated against the respective supporting shells (5) are inserted in unoccupied cable lead-through apertures.

6. A cable sleeve according to any one of claims 1 to 5, characterised in that the sealing body halves (3a, 3b) have sealing chambers (16) in their two edge abutment regions for sealing the injection chamber (6), and compressible sealing profiles (17) can be inserted in the sealing chambers (16).

7. A cable sleeve according to any one of claims 1 to 6, characterised in that only the lower sealing body half (3b) comprises, in the region of its edge abutment faces, the sealing chambers (16) with a fixing lug (18) in each case for engaging in a fixing recess (19) in the inserted sealing profiles (17), which sealing profiles are constructed as sealing projections of a circumferential seal (21), e.g. a round cord seal, surrounding one of the respective sealing bodies (3) in a fixing groove (20).

8. A cable sleeve according to any one of claims 1 to 7, characterised in that the injection opening (7) and the deaeration opening (8) are formed as holes with a screw plug (23).

9. A cable sleeve according to any one of claims 1 to 8, characterised in that an air valve (24) is inserted in the upper and/or lower sealing body half (3a; 3b).

10. A cable sleeve according to any one of claims 1 to 9, characterised in that the sealing body halves (3a, 3b) can be braced against each other in pairs by means of screw bolts (25), and the screw bolts (25) can be screwed into holes (26) with threaded inserts (27) between the front and rear cable lead-through apertures (4).

11. A cable sleeve according to any one of claims 1 to 10, characterised in that the two sealing bodies (3) to be inserted in the sleeve tube (2) are spaced apart by means of an upper and a lower strain-relief bar (28) and for this purpose the strain-relief bars (28), which can be screwed to the sealing bodies (3), have centring holes (29) at a predetermined spacing, in which centring cams (30) on the mutually facing sides of the sealing bodies (3) engage.

12. A cable sleeve according to any one of claims 1 to 11, characterised in that the sealing bodies (3) have centring formations (31) on both sides as stops for centring lugs (32) on the sleeve tube (2).

13. A cable sleeve according to any one of claims 1 to 12, characterised in that the sealing bodies (3) have an elliptical circumference and consist of synthetic thermoplastic material.

## Revendications

1. Manchon de câble pour jonction et dérivation de câbles (1), en particulier de câbles de télécommunications, avec un tube de manchon (2) et avec des corps d'étanchéité (3) à insérer dans les faces frontales du tube de manchon (2) avec des évidements de passage (4) des câbles, les corps d'étanchéité (3) divisés transversalement étant sous la forme de moitiés (3a, 3b) de corps d'étanchéité pouvant être serrées l'une contre l'autre avec les éléments d'étanchéité (5) semi-circulaires garnissant les évidements de passage (4) des câbles pour l'adaptation à différents diamètres de câbles, les corps d'étanchéité (3) présentant chaque fois, dans le sens longitudinal des câbles, deux évidements de passage (4) des câbles espacés l'un de l'autre d'une distance prédéterminée, une chambre d'injection (6) avec une ouverture d'injection (7) et un évent (8) étant prévue entre les évidements de passage (4) antérieurs et postérieurs pour le passage des câbles (1),
**caractérisé** en ce que les moitiés (3a, 3b) de corps d'étanchéité constituant le corps d'étanchéité respectif présentent sur le côté des surfaces jointives dans les zones périphériques de leurs surfaces jointives et entre les évidements de passage (4) des câbles des éléments de liaison à rainure et languette (9), en ce qu'il est prévu une chambre d'injection (7) commune pour tous les câbles (1), et en ce que des coquilles d'appui (5) pouvant être retirées individuellement sont insérées en tant qu'éléments d'étanchéité dans les évidements de passage (4) des câbles pour l'adaptation à des diamètres de câbles différents.

2. Manchon de câble selon la revendication 1, caractérisé en ce que les évidements de passage (4) des câbles et les coquilles d'appui (5) présentent des dentures (10) s'engageant l'une dans l'autre, par exemple des cannelures à section conique, en tant que moyen de blocage axial.

3. Manchon de câble selon une des revendications 1 ou 2, caractérisé en ce que les câbles (1) sont insérés dans la coquille d'appui (5) correspondant à leur diamètre respectif au moyen de rubans d'étanchéité (11) bobinés autour d'eux.

4. Manchon de câble selon une des revendications 1 à 3, caractérisé en ce que des bouchons adaptateurs (12) flexibles élastiquement peuvent être insérés dans les évidements de passage (4) des câbles, avec un ou plusieurs alésages (13) pour le passage d'un ou plusieurs câbles (1) de diamètres différents.

5. Manchon de câble selon une des revendications 1 à 4, caractérisé en ce que des barres de remplissage (14) sont insérées dans les ouvertures de passage de câbles non occupées, avec des bagues d'étanchéité (15) prenant appui contre les coquilles d'appui (5) correspondantes.

6. Manchon de câble selon une des revendications 1 à 5, caractérisé en ce que les moitiés (3a, 3b) du corps d'étanchéité présentent dans leurs deux zones de contact sur leurs bords des chambres d'étanchéité (16) pour assurer l'étanchéité de la chambre d'injection (6) et en ce que des profilés d'étanchéité (17) compressibles peuvent être insérés dans les chambres d'étanchéité (16).

7. Manchon de câble selon une des revendications 1 à 6, caractérisé en ce que seule la moitié inférieure (3b) du corps d'étanchéité présente, dans la zone de contact sur ses bords, la chambre d'étanchéité (16) avec chaque fois un bec de fixation (18) destiné à s'engager dans un évidement de fixation (19) des profilés d'étanchéité (17) insérés, lesquels sont, en tant qu'appendices étanches sous la forme d'un joint périphérique (21) entourant le corps d'étanchéité (3) respectif dans une rainure de fixation (20), par exemple sous la forme d'un joint en cordon rond.

8. Manchon de câble selon une des revendications 1 à 7, caractérisé en ce que l'ouverture d'injection (7) et l'évent (8) sont sous la forme de forures avec un bouchon vissé (23).

9. Manchon de câble selon une des revendications 1 à 8, caractérisé en ce qu'une soupape à air (24) est insérée dans la moitié supérieure (3a) et/ou dans la moitié inférieure (3b) du corps d'étanchéité.

10. Manchon de câble selon une des revendications 1 à 9, caractérisé en ce que les moitiés (3a, 3b) du corps d'étanchéité peuvent être serrées par paires l'une contre l'autre au moyen de boulons (25) et les boulons (25) peuvent être vissés dans des alésages (26) avec des pièces insérées taraudées (27) ménagés entre les évidements (4) antérieurs et postérieurs de passage des câbles.

11. Manchon de câble selon une des revendications 1 à 10, caractérisé en ce que les deux corps étanches (3) à insérer dans le tube de manchon (2) sont espacés l'un de l'autre au moyen de deux barres de décharge de traction (28), l'une supérieure et l'autre inférieure, et à cet effet les barres de décharge de traction (28) pouvant être boulonnées avec les corps étanches (3) présentent à un espacement prédéterminé des trous de centrage (29) dans lesquels s'engagent des cames de centrage (30) situées sur les faces du corps étanche (3) tournées l'une vers l'autre.

12. Manchon de câble selon une des revendications 1 à 11, caractérisé en ce que les corps étanches (3) présentent sur leurs deux côtés des bossages de centrage (31) en tant que butées pour des becs de centrage (32) sur le tube de manchon (2).

13. Manchon de câble selon une des revendications 1 à 12, caractérisé en ce que les corps étanches (3) présentent un contour elliptique et sont en matériau thermoplastique.
